# EUROPEAN PATENT SPECIFICATION

(11) **EP 4 224 546 B1**
(45) Date of publication and mention of the grant of the patent: **02.12.2026**
(21) Application number: 22879663.7
(22) Date of filing: 27.10.2022
(51) Int. Cl.: H01M 4/04, F26B 3/30, F26B 13/10, G01N 3/00, H01M 10/42

(54) **DEVICE FOR SIMULATING ELECTRODE SHEET THERMAL WRINKLES, AND SIMULATION METHOD USING SAME**
VORRICHTUNG ZUR SIMULATION VON WÄRMEFALTEN IN EINER ELEKTRODENFOLIE UND SIMULATIONSVERFAHREN DAMIT
DISPOSITIF DE SIMULATION DE RIDES THERMIQUES DE FEUILLE D'ÉLECTRODE, ET PROCÉDÉ DE SIMULATION L'UTILISANT

(30) Priority: 11.11.2021 KR 20210154371
(43) Date of publication of application: 09.08.2023
(73) Proprietor: LG ENERGY SOLUTION, LTD., Seoul 07335 (KR)
(72) Inventor: MOON, Jae Won, Daejeon 34122 (KR); KWON, Jung Geun, Daejeon 34122 (KR); LEE, Sang Myeon, Daejeon 34122 (KR); PAENG, Ki Hoon, Daejeon 34122 (KR)
(74) Representative: Plasseraud IP
(86) International application number: PCT/KR2022/016535
(87) International publication number: WO 2023/085655

(56) References cited:
- CN-U- 203 365 237
- CN-U- 204 556 376
- JP-A- H11 102 696
- KR-A- 20170 050 376
- KR-A- 20180 090 532
- KR-A- 20180 114 532
- KR-A- 20210 050 721

## Description

### [Technical Field]

This application claims the benefit of priority to Korean Patent Application No. 2021-0154371 filed on November 11, 2021.

The present invention relates to an apparatus for simulating thermal wrinkles of an electrode sheet and a simulation method using the same, and more particularly to an apparatus for simulating thermal wrinkles of an electrode sheet capable of performing a test under the same conditions as an electrode drying apparatus to closely examine the cause of a thermal wrinkle phenomenon and to establish optimal drying conditions and a simulation method using the same.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS) .

There are a lithium ion battery, a lithium polymer battery, a nickel cadmium battery, a nickel hydride battery, and a nickel zinc battery as secondary batteries that are widely used at present.

In general, such a secondary battery is configured such that an electrode assembly and an electrolytic solution are received in a battery case.

The electrode assembly may generally be a jelly-roll type assembly, which is configured to have a structure in which a long sheet type positive electrode and a long sheet type negative electrode are wound in the state in which a separator is interposed therebetween, a stacked type assembly, which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which battery cells are stacked in the state in which a separator is interposed therebetween and are then attached to each other.

In addition, an electrolyte may be replaced by a solid electrolyte or a gel type quasi-solid electrolyte obtained by adding an additive to a solid electrolyte, the gel type quasi-solid electrolyte having an intermediate phase between a liquid and a solid, in addition to a liquid electrolyte, which is commonly used.

The electrode assembly is received in the battery case, and the secondary battery may be classified as a cylindrical battery having the electrode assembly mounted in a cylindrical metal can, a prismatic battery having the electrode assembly mounted in a prismatic metal can, or a pouch-shaped battery having the electrode assembly mounted in a pouch-shaped case made of an aluminum laminate sheet based on the kind of the battery case.

Meanwhile, a method of manufacturing the electrode of the secondary battery includes a process of applying a slurry manufactured by dispersing an active material, a conductive agent, and a binder in a solvent to an electrode current collector and drying the slurry.

At this time, the electrode may be dried using a method of introducing a sheet type electrode into a drying apparatus in a state of being wound around a roll and drying the electrode. In this case, however, as the drying process is performed in an overlapping state, there is a difference in dryness between the inside and the outside of the electrode.

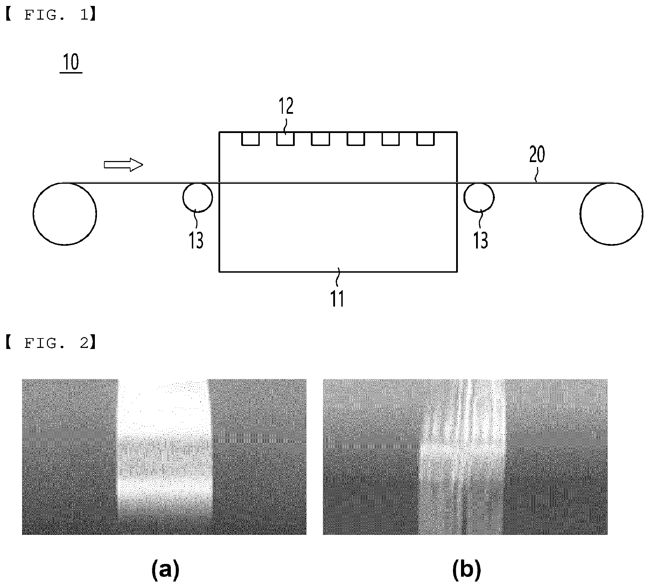

FIG. 1 is a front view schematically showing the structure of a conventional electrode sheet drying apparatus, and FIG. 2 is a view showing the state of a non-coated portion (a) before and (b) after an electrode sheet is introduced into a chamber using the conventional electrode sheet drying apparatus.

As shown in FIG. 1, the conventional electrode sheet drying apparatus includes a chamber 11 having an empty interior, a heating means 12, and a guide roll 13, and an electrode sheet 20 is dried while passing through the conventional electrode sheet drying apparatus.

The apparatus has a merit in that it is possible to uniformly dry the electrode sheet 20. Since the entirety of the electrode sheet 20 is heated, however, thermal wrinkles are generated in a non-coated portion, i.e. a portion which has no active material applied thereto and from which an electrode current collector is exposed, as shown in (b) of FIG. 2.

In order to minimize or prevent the occurrence of such a thermal wrinkle phenomenon, additional research has been conducted. Particularly, attempts to perform tests under the same conditions as an electrode drying apparatus in order to closely examine the cause of the thermal wrinkle phenomenon have been made.

As an example, an electrode sheet having an active material applied thereto is stretched to a predetermined length under normal temperature to measure tensile load required at this time, and heat is applied in the same state as drying conditions to measure tensile load. Subsequently, tensile load is measured in the state in which the normal temperature state is maintained. In this way, tensile load is evaluated under the same conditions as drying conditions of an actual electrode, and optimal improvement of the drying process or apparatus is devised based on the result.

However, it is not easy to measure tensile load in a high-temperature state. In general, a universal testing machine (UTM) is used to measure tensile load; however, it is not easy to heat the UTM to a predetermined temperature range. Of course, a chamber that is large sufficient to receive the UTM may be used. In this case, however, various kinds of sensors mounted to the UTM cannot withstand high temperatures, and therefore it is impossible to receive the entirety of the UTM in the chamber. Furthermore, a stretching range is merely a few mm when a test of simulating a thermal wrinkle phenomenon of an electrode sheet is performed, and therefore the test must be performed while movement of the UTM is inhibited if possible in order to acquire accurate results.

### (Prior Art Document)

(Patent Document 1) Korean Registered Patent Publication No. 2167118.

CN 204 556 376 U, forming the basis for the characterizing portion of claim 1, discloses an electric rail device for a high-temperature tensile testing machine.

CN 203 365 237 U discloses an apparatus to measure high temperature tensile mechanical properties.

### [Disclosure]

### [Technical Problem]

The present invention has been made in view of the above problems, and it is an object of the present invention to provide an apparatus for simulating thermal wrinkles of an electrode sheet capable of simulating a thermal wrinkle phenomenon occurring in a non-coated portion of an electrode sheet.

It is another object of the present invention to provide a thermal wrinkle simulation method capable of simulating a thermal wrinkle phenomenon occurring in a non-coated portion of an electrode sheet.

The Invention is as defined by the appended claims.

### [Technical Solution]

An apparatus for simulating thermal wrinkles of an electrode sheet according to the present invention to accomplish the above objects is an apparatus for simulating thermal wrinkles of an electrode sheet having an active material applied thereto generated during drying of the electrode sheet, the apparatus including an electrode sheet fixing unit (100) configured to apply a tensile load to the electrode sheet (S) to stretch the electrode sheet by a predetermined length in the state in which opposite ends of the electrode sheet are fixed to the fixing unit; a temperature adjustment unit (200) configured to heat the electrode sheet fixing unit to a predetermined temperature while covering the electrode sheet fixing unit (100); and a rail (300) configured to move the temperature adjustment unit (200).

Also, in the apparatus for simulating the thermal wrinkles of the electrode sheet according to the present invention, the electrode sheet fixing unit (100) may include a holding portion (110) comprising a first holding portion (111) having a first fixing portion (111') configured to fix an upper end of the electrode sheet (S) thereto and a second holding portion (112) located under the first holding portion (111), the second holding portion having a second fixing portion (112') configured to fix a lower end of the electrode sheet (S) thereto, a loading portion (120) comprising a first loading bar (121) connected to the first holding portion (111) and a second loading bar (122) configured to support the second holding portion (112), a driving portion (130) configured to move the first loading bar (121) upwards and downwards, a support frame (140) comprising a vertical bar (141) located vertically in a state of extending by a predetermined length and a horizontal bar (142) movable upwards and downwards vertically along the vertical bar (141), one side of the horizontal bar being connected to the driving portion (130), a controller (150) connected to the support frame (140), the controller being configured to control and measure a stretching length and tensile load of the electrode sheet (S), and a support die (160) supporting a lower end of the second holding portion (112) and a lower end of the vertical bar (141).

Also, in the apparatus for simulating the thermal wrinkles of the electrode sheet according to the present invention, the temperature adjustment unit (200) includes a first member (210) and a second member (220) configured to be located on opposite side surfaces of the electrode sheet fixing unit (100), the first member (210) includes a first cover portion (211), which is a rectangular plate, and a first wheel (213) mounted to a lower end of the first cover portion (211) such that the first cover portion (211) is movable, the second member (220) includes a second cover portion (221), which is a rectangular plate, and a second wheel (223) mounted to a lower end of the second cover portion (221) such that the second cover portion (221) is movable, and a heating portion configured to maintain the electrode sheet fixing unit (100) at a predetermined temperature may be located on an inner surface of the first cover portion (211) and/or the second cover portion (221).

Also, in the apparatus for simulating the thermal wrinkles of the electrode sheet according to the present invention, an upper part of the first cover portion (211) may be arched in a direction toward the electrode sheet fixing unit (100).

Also, in the apparatus for simulating the thermal wrinkles of the electrode sheet according to the present invention, an upper part of the second cover portion (221) may be arched in the direction toward the electrode sheet fixing unit (100).

Also, in the apparatus for simulating the thermal wrinkles of the electrode sheet according to the present invention, an extension portion may be provided at opposite sides or one side of the first cover portion (211) so as to extend in the direction toward the electrode sheet fixing unit (100).

Also, in the apparatus for simulating the thermal wrinkles of the electrode sheet according to the present invention, an extension portion may be provided at opposite sides or one side of the second cover portion (221) so as to extend in the direction toward the electrode sheet fixing unit (100).

Also, in the apparatus for simulating the thermal wrinkles of the electrode sheet according to the present invention, a plurality of spray nozzles configured to form an air curtain to maintain the electrode sheet fixing unit (100) at a predetermined temperature may be provided at an edge of an inner surface of the first cover portion (211) and/or the second cover portion (221).

In addition, a method of simulating thermal wrinkles of an electrode sheet according to the present invention includes (a) fixing an electrode sheet to the electrode sheet fixing unit (100) at a normal temperature, (b) setting a stretching length for the electrode sheet and applying a load to the electrode sheet to measure a tensile force, (c) moving the temperature adjustment unit (200) to cover opposite side surfaces of the electrode sheet fixing unit (100) and measuring a tensile force; and (d) moving the temperature adjustment unit (200)such that the electrode sheet fixing unit (100) is exposed to the normal temperature and measuring a tensile force.

Also, in the method of simulating the thermal wrinkles of the electrode sheet according to the present invention, during step (c), the temperature adjustment unit (200) may be heated in advance to a predetermined temperature.

Also, in the method of simulating the thermal wrinkles of the electrode sheet according to the present invention, step (c) may further include heating the temperature adjustment unit (200) to a predetermined temperature after the temperature adjustment unit is located at the opposite side surfaces of the electrode sheet fixing unit (100).

Also, in the method of simulating the thermal wrinkles of the electrode sheet according to the present invention, during step (c) and step (d), the temperature adjustment unit (200) may be moved along the rail (300).

Also, in the method of simulating the thermal wrinkles of the electrode sheet according to the present invention, during step (c), an air curtain may be formed by the spray nozzles located along the edge of the inner surface of the first cover portion (211) and/or the second cover portion (221).

### [Advantageous Effects]

An apparatus for simulating thermal wrinkles of an electrode sheet according to the present invention and a simulation method using the same have a merit in that it is possible to mainly heat a holding portion that holds an electrode sheet to be measured, whereby it is possible to prevent failure or malfunction of the apparatus due to heat.

In addition, the apparatus for simulating the thermal wrinkles of the electrode sheet according to the present invention and the simulation method using the same have an advantage in that only a temperature adjustment unit, including the holding portion, is moved in the state in which an electrode sheet fixing unit, to which the electrode sheet to be measured is mounted, is not moved, whereby it is possible to improve reliability of measurement results.

### [Description of Drawings]

FIG. 1 is a front view schematically showing the structure of a conventional electrode sheet drying apparatus.
FIG. 2 is a view showing the state of a non-coated portion (a) before and (b) after an electrode sheet is introduced into a chamber using the conventional electrode sheet drying apparatus.
FIG. 3 is a side view of an electrode sheet fixing unit according to a preferred embodiment of the present invention.
FIG. 4 is a front view of the electrode sheet fixing unit according to the preferred embodiment of the present invention.
FIG. 5 is a perspective view of a holding portion of the electrode sheet fixing unit according to the preferred embodiment of the present invention.
FIG. 6 is a perspective view showing an apparatus for simulating thermal wrinkles of an electrode sheet according to a first embodiment of the present invention.
FIG. 7 is a front view of the apparatus for simulating the thermal wrinkles of the electrode sheet shown in FIG. 6.
FIG. 8 is a front view showing an apparatus for simulating thermal wrinkles of an electrode sheet according to a second embodiment of the present invention.
FIG. 9 is a front view showing an apparatus for simulating thermal wrinkles of an electrode sheet according to a third embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an apparatus for simulating thermal wrinkles of an electrode sheet according to the present invention and a simulation method using the same will be described with reference to the accompanying drawings.

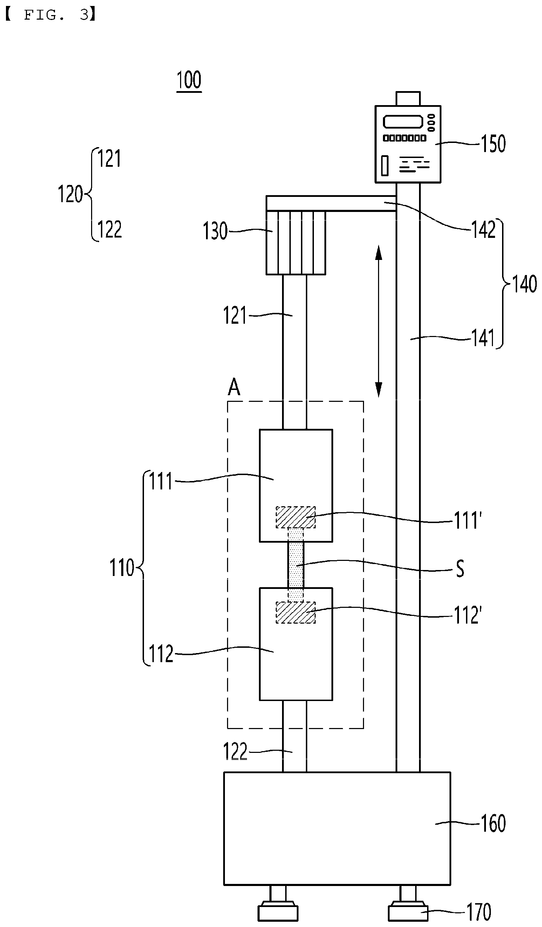

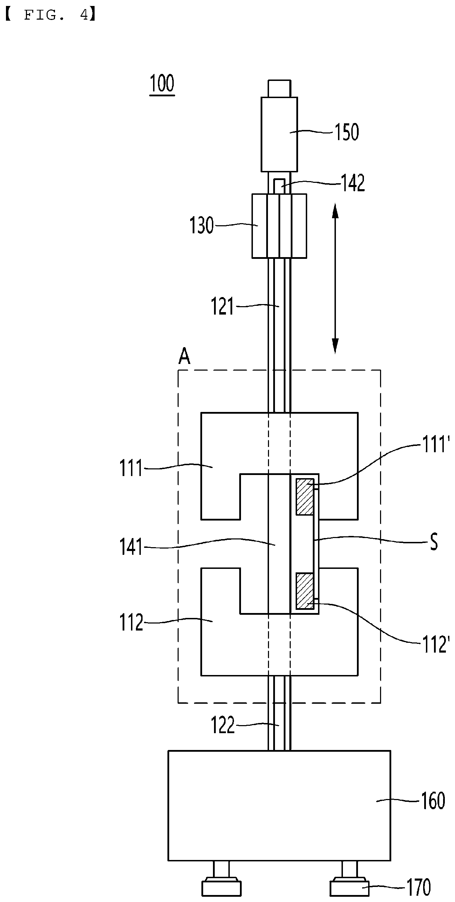

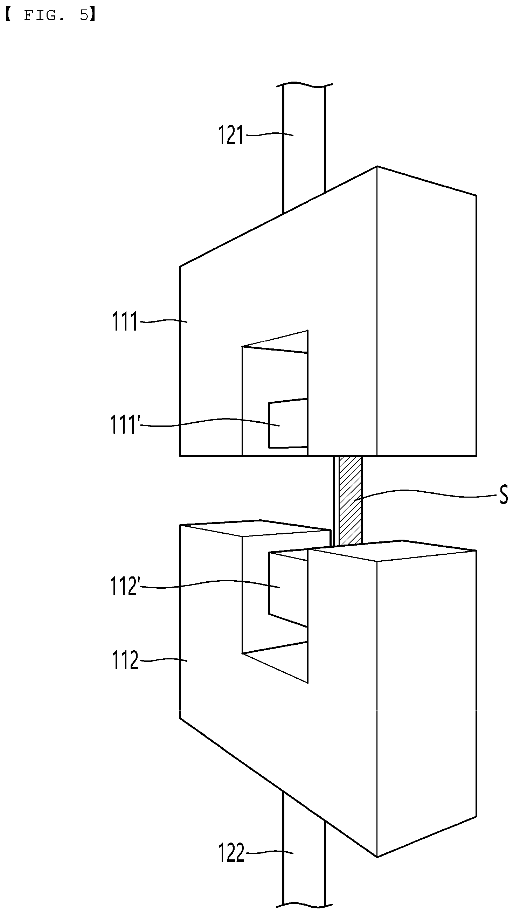

FIG. 3 is a side view of an electrode sheet fixing unit according to a preferred embodiment of the present invention, FIG. 4 is a front view of the electrode sheet fixing unit according to the preferred embodiment of the present invention, and FIG. 5 is a perspective view of a holding portion of the electrode sheet fixing unit according to the preferred embodiment of the present invention.

The apparatus for simulating the thermal wrinkles of the electrode sheet according to the present invention is a simulation apparatus that determines the cause of a thermal wrinkle phenomenon occurring in an electrode sheet having an active material applied thereto during a process of drying the electrode sheet such that the drying process can be performed under optimal conditions.

The apparatus for simulating the thermal wrinkles of the electrode sheet includes an electrode sheet fixing unit 100 configured to apply load to an electrode sheet S so as to be stretched by a predetermined length in the state in which opposite ends of the electrode sheet are fixed in order to measure tensile force, a temperature adjustment unit configured to heat the electrode sheet fixing unit 100 to a predetermined temperature while covering the electrode sheet fixing unit 100 in order to implement drying conditions of an actual electrode sheet, and a rail configured to move the temperature adjustment unit forwards and rearwards or leftwards and rightwards.

First, the electrode sheet fixing unit 100 will be described in detail with reference to FIGs. 3 to 5.

The electrode sheet fixing unit 100 includes a holding portion 110, a loading portion 120, a driving portion 130, a support frame 140, a controller 150, a support die 160, and a leg 170.

Specifically, the holding portion 110, which is configured to fix an electrode sheet S to be measured, is constituted by a pair of holding portions, i.e. a first holding portion 111 and a second holding portion 112, located separated from each other.

The first holding portion 111, which is provided with a first fixing portion 111', fixes an upper end of the electrode sheet S, and the second holding portion 112, which is provided with a second fixing portion 112', fixes the other end, i.e. a lower end, of the electrode sheet S.

Here, although a fixing method is not particularly restricted as long as it is possible to withstand predetermined tensile load, opposite ends of the electrode sheet S may be fixed using high-temperature heat-resistant tape, such as polyimide film.

The loading portion 120, which is configured to increase the distance between the first holding portion 111 and the second holding portion 112 in order to apply tensile load to the electrode sheet S, may be constituted by a first loading bar 121 connected to the first holding portion 111 and a second loading bar 122 configured to support the second holding portion 112 under the second holding portion.

Here, although both the first loading portion 121 and the second loading bar 122 may be independently moved, only the first loading bar 121 connected to the first holding portion 111 may be movable, since it is advantageous to pull the first holding portion 111, which is located relatively high, upwards in order to measure tensile force.

The driving portion 130 is configured to move the first loading bar 121 upwards and downwards such that the electrode sheet S is stretched by a length set by the controller 150.

The support frame 140, which is configured to support the first loading bar 121, may be constituted by a vertical bar 141 located vertically in a state of extending by a predetermined length and a horizontal bar 142 configured to be movable upwards and downwards along the vertical bar 141, one side of the horizontal bar being connected to the driving portion 130. However, the construction of the support frame is not particularly restricted as long as the support frame is movable as described above.

It is preferable for the controller 150, which is configured to control and measure the stretching length of the electrode sheet S and tensile load at that time, to be located at an upper part of the vertical bar 141 if possible. The reason for this is that, when tensile load is measured, heating must be performed in a temperature range similar to the temperature of an actual drying furnace, and it is necessary to prevent damage to the controller 150 or malfunction of the controller due thereto.

The support die 160 is configured to securely support the holding portion 110, the loading portion 120, the driving portion 130, the support frame 140, and the controller 150. Specifically, a lower end of the second holding portion 112 and a lower end of the vertical bar 141 are fixed to the support die 160.

Meanwhile, a plurality of legs 170, the length of each of which is adjustable, may be provided at a bottom surface of the support die 160 such that horizontality of the support die 160 is maintained, as needed.

In addition, although not shown in the drawings, a temperature sensor may be provided at the holding portion 110 or the vertical bar 141 in order to measure the temperature of the vicinity of the electrode sheet S, and the measured temperature may be transmitted to the controller 150 so as to be stored.

Next, the temperature adjustment unit configured to heat the electrode sheet fixing unit 100 to a predetermined temperature while covering the electrode sheet fixing unit will be described.

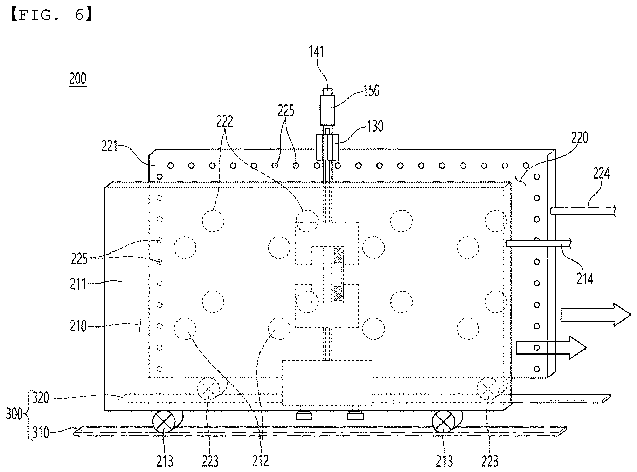

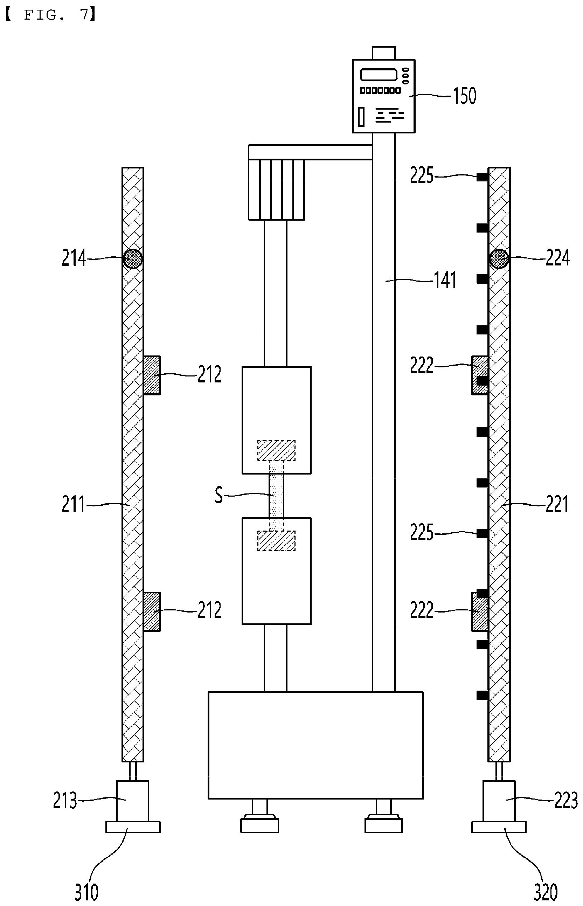

FIG. 6 is a perspective view showing an apparatus for simulating thermal wrinkles of an electrode sheet according to a first embodiment of the present invention, and FIG. 7 is a front view of the apparatus for simulating the thermal wrinkles of the electrode sheet shown in FIG. 6.

As shown in FIGs. 6 and 7, the temperature adjustment unit 200 is constituted by a first member 210 and a second member 220 located at opposite side surfaces of the electrode sheet fixing unit 100.

First, the first member 210 may include a first cover portion 211, a first heating portion 212, a first wheel 213, and a first rope 214.

Specifically, the first cover portion 211 is located in a direction toward one side of the electrode sheet fixing unit 100, and has a rectangular plate shape extending long with respect to the ground so as to sufficiently cover one side of the electrode sheet fixing unit 100.

The first heating portion 212 is located at an inner surface of the first cover portion 211 to heat the electrode sheet fixing unit 100, more specifically the holding portion 110, to which the electrode sheet S is fixed, to a predetermined temperature range.

Here, various known heat sources capable of applying heat to reach a predetermined temperature, such as a heat coil or an infrared lamp, may be used as the first heating unit 212; however, the present invention is not limited thereto.

The first wheel 213 is mounted to a lower end of the first cover portion 211, and is configured to move the first cover portion 211 forwards and rearwards along the first rail 310.

Meanwhile, the first rope 214 is configured to be held by a hand of a worker or to be connected to a separate driving device when the first cover portion 211 is pushed or pulled. Although the first rope is shown as being mounted to one edge of the first cover portion in the drawings, the first rope may be provided at a side surface of the first cover portion 211.

The second member 220 includes a second cover portion 221, a second heating portion 222, a second wheel 223, a second rope 224, and a spray nozzle 225.

The second cover portion 221 is disposed so as to face the first cover portion 211 in a state of being spaced apart therefrom by a predetermined distance so as to be located in a direction toward the other side of the electrode sheet fixing unit 100, and has the same external shape as the first cover portion 211.

The second heating portion 222, which is located at an inner surface of the second cover portion 221, the second wheel 223, which is mounted to a lower end of the second cover portion 221, and the second wheel 223, which is mounted to a lower end of the second cover portion 221, are identical to the first heating portion 212, the first wheel 213, and the first rope 214 of the first member 210, respectively, and therefore a duplicate description thereof will be omitted.

Meanwhile, the spray nozzle 225 may be further provided at the second member 220. Since the controller 150, which is sensitive to temperature, is provided at the electrode sheet fixing unit 100, it is impossible to heat the entirety of the electrode sheet fixing unit 100.

Consequently, the holding portion 110 is mainly heated in the state in which the controller 150 is exposed to the outside. At this time, a part at which the first cover portion 211 and the second cover portion 221 are not located is exposed in a space defined by the cover portions, whereby it may be difficult to accurately adjust the temperature of the vicinity of the holding portion 110.

The spray nozzle 225 is configured to remedy the above shortcoming. A plurality of spray nozzles is provided along the edge of the inner surface of the second cover portion 221 so as to form an air curtain such that the temperature of the vicinity of the holding portion 110 can easily be adjusted.

Here, it is preferable for air sprayed through the spray nozzle 225 to be air heated to a temperature range as similar to the temperature of the vicinity of the holding portion 110 as possible.

Although the spray nozzle 225 is shown as being provided at the second member 220 in the drawings, the spray nozzle 225 may be provided at the first member 210 instead of the second member 220.

In addition, the heating portion may be provided at any one of the first member 210 and the second member 220.

The rail 300, which is configured to move the temperature adjustment unit 200, is constituted by a first rail 310 and a second rail 320. The first wheel 213 is seated on the first rail 310 and the second wheel 223 is seated on the second rail 320 to provide movement paths of the first member 210 and the second member 220.

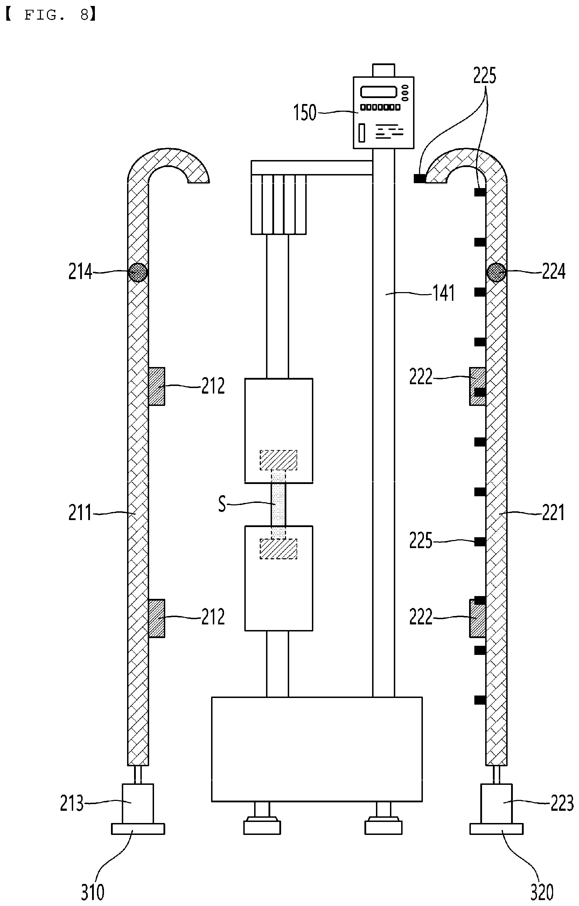

FIG. 8 is a front view showing an apparatus for simulating thermal wrinkles of an electrode sheet according to a second embodiment of the present invention. The second embodiment is identical in construction to the first embodiment described with reference to FIGs. 6 and 7 except only for the external shapes of the first cover portion 211 and the second cover portion 221.

That is, in the second embodiment, an upper part of the first cover portion 211 and an upper part of the second cover portion 221 are arched so as to face in a direction toward the electrode sheet fixing unit 100 in order to prevent upward outflow of heated air such that the temperature of the vicinity of the holding portion 110 can be more easily adjusted.

Of course, it is possible to achieve a desired effect even though the upper part of only one of the cover portions is arched.

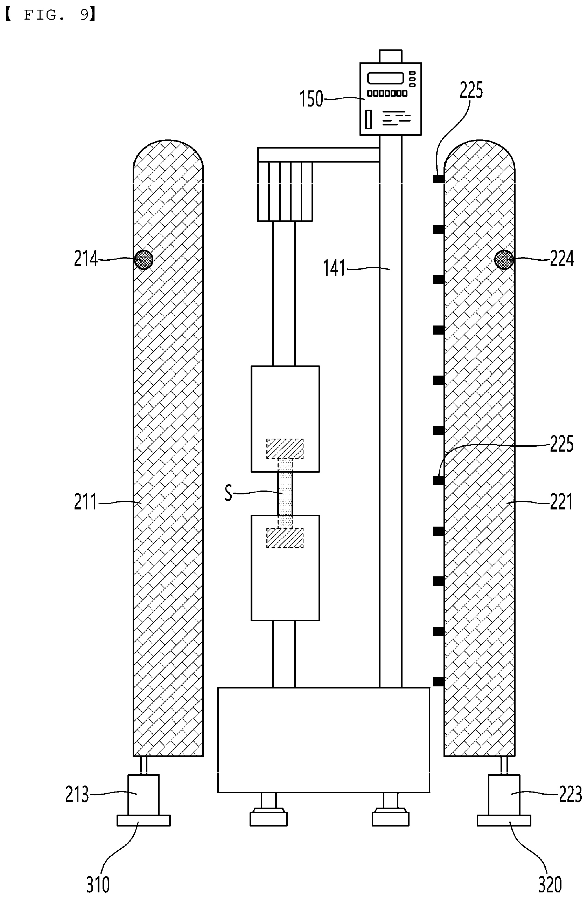

FIG. 9 is a front view showing an apparatus for simulating thermal wrinkles of an electrode sheet according to a third embodiment of the present invention. The third embodiment is identical in construction to the second embodiment described with reference to FIG. 8 except only for the external shapes of the first cover portion 211 and the second cover portion 221.

That is, in the third embodiment, an extension portion is provided at opposite sides or one side of the first cover portion 211 and opposite sides or one side of the second cover portion 221 in a state of being bent in the direction toward the electrode sheet fixing unit 100 in order to prevent forward or rearward outflow of heated air such that the temperature of the vicinity of the holding portion 110 can be more easily adjusted.

Of course, it is possible to achieve a desired effect even though the extension portion is provided at only one of the cover portions.

In addition, it is obvious that an extension portion may be provided at each of the first cover portion 211 and the second cover portion 221 of the first embodiment in a state of being bent.

Next, a method of simulating thermal wrinkles of an electrode sheet using the apparatus for simulating the thermal wrinkles of the electrode sheet according to the present invention will be described.

The method of simulating the thermal wrinkles of the electrode sheet includes (a) a step of fixing an electrode sheet to the electrode sheet fixing unit at a normal temperature (20 to 25°C), (b) a step of setting a stretching length and applying load to measure tensile force, (c) a step of moving the temperature adjustment unit so as to cover opposite side surfaces of the electrode sheet fixing unit and measuring tensile force, and (d) a step of moving the temperature adjustment unit such that the electrode sheet fixing unit is exposed to the normal temperature (20 to 25°C) and measuring tensile force.

Here, thermal wrinkles of the electrode sheet may be wrinkles in a non-coated portion, i.e. a portion coated with no active material, frequently generated during drying of the electrode sheet.

Meanwhile, in step (c), the temperature adjustment unit may be moved so as to cover the opposite side surfaces of the electrode sheet fixing unit in the state in which the temperature adjustment unit is heated in advance to a predetermined temperature, or the temperature adjustment unit may be heated to a predetermined temperature after the temperature adjustment unit is located at the opposite side surfaces of the electrode sheet fixing unit.

Also, in step (c), spray nozzles located along the edge of the inner surface of the cover portion may be operated to form an air curtain, and then tensile force may be measured in the state in which the air curtain is formed.

Furthermore, the temperature in step (c) may be a temperature range applied when an actual electrode sheet is dried, such as 150 to 200°C, the set stretching length may be 0.5 to 2.0 mm, and retention time for each step may be a few minutes; however, these may be changed or adjusted without limit.

Also, in step (c) and step (d), it is preferable for the temperature adjustment unit to be moved along the rail.

Although the specific details of the present invention have been described in detail, those skilled in the art will appreciate that the detailed description thereof discloses only preferred embodiments of the present invention. Accordingly, those skilled in the art will appreciate that various changes and modifications are possible, and it will be obvious that such changes and modifications fall within the scope of the appended claims.

### (Description of Reference Symbols)

100: Electrode sheet fixing unit
110: Holding portion
111: First holding portion 111': First fixing portion
112: Second holding portion 112': Second fixing portion
120: Loading portion
121: First loading bar 122: Second loading bar
130: Driving portion
140: Support frame
141: Vertical bar 142: Horizontal bar
150: Controller
160: Support die
170: Leg
200: Temperature adjustment unit
210: First member
211: First cover portion 212: First heating portion
213: First wheel 214: First rope
220: Second member
221: Second cover portion 222: Second heating portion
223: Second wheel 224: Second rope
225: Spray nozzle
300: Rail
310: First rail
320: Second rail
S: Electrode sheet

## Claims

1. An apparatus for simulating thermal wrinkles of an electrode sheet (S) having an active material applied thereto generated during drying of the electrode sheet (S), the apparatus comprising:
an electrode sheet fixing unit (100) configured to apply a tensile load to the electrode sheet (S) to stretch the electrode sheet (S) by a predetermined length in a state in which opposite ends of the electrode sheet (S) are fixed to the fixing unit (100);
a temperature adjustment unit (200) configured to heat the electrode sheet fixing unit (100) to a predetermined temperature while covering the electrode sheet fixing unit (100); and
a rail (300) configured to move the temperature adjustment unit (200),
**characterized in that** the temperature adjustment unit (200) comprises a first member (210) and a second member (220) configured to be located on opposite side surfaces of the electrode sheet fixing unit (100),
the first member (210) comprises a first cover portion (211), which is a rectangular plate, and two first wheels (213) mounted to a lower end of the first cover portion (211) such that the first cover portion (211) is movable,
the second member comprises a second cover portion (221), which is a rectangular plate, and two second wheels (223) mounted to a lower end of the second cover portion (221) such that the second cover portion (221) is movable, and
a heating portion configured to maintain the electrode sheet fixing unit (100) at a predetermined temperature is located on an inner surface of the first cover portion (211) and/or the second cover portion (221),
wherein the rail is constituted by a first rail (310) and a second rail (320), wherein the two first wheels (213) are seated on the first rail (310) and the two second wheels (223) are seated on the second rail (320) to provide movement paths of the first member (210) and the second member (220).

2. The apparatus according to claim 1, wherein the electrode sheet fixing unit (100) comprises:
a holding portion (110) comprising a first holding portion (111) having a first fixing portion (111') configured to fix an upper end of the electrode sheet (S) thereto and a second holding portion (112) located under the first holding portion (111), the second holding portion (112) having a second fixing portion (112') configured to fix a lower end of the electrode sheet (S) thereto;
a loading portion (120) comprising a first loading bar (121) connected to the first holding portion (111) and a second loading bar (122) configured to support the second holding portion (112);
a driving portion (130) configured to move the first loading bar (121) upwards and downwards;
a support frame (140) comprising a vertical bar (141) located vertically in a state of extending by a predetermined length and a horizontal bar (142) movable upwards and downwards vertically along the vertical bar (141), one side of the horizontal bar (142) being connected to the driving portion (130);
a controller (150) connected to the support frame (140), the controller (150) being configured to control and measure a stretching length and tensile load of the electrode sheet (S); and
a support die (160) supporting a lower end of the second holding portion (112) and a lower end of the vertical bar (141).

3. The apparatus according to claim 1, wherein an upper part of the first cover portion (211) is arched in a direction toward the electrode sheet fixing unit (100).

4. The apparatus according to claim 1, wherein an upper part of the second cover portion (221) is arched in a direction toward the electrode sheet fixing unit (100).

5. The apparatus according to claim 1, wherein an extension portion is provided at opposite sides or one side of the first cover portion (211) so as to extend in a direction toward the electrode sheet fixing unit (100).

6. The apparatus according to claim 1, wherein an extension portion is provided at opposite sides or one side of the second cover portion (221) so as to extend in a direction toward the electrode sheet fixing unit (100).

7. The apparatus according to claim 1, wherein a plurality of spray nozzles (225) configured to form an air curtain to maintain the electrode sheet fixing unit (100) at a predetermined temperature is provided at an edge of an inner surface of the first cover portion (211) and/or the second cover portion (221).

8. A method of simulating thermal wrinkles of an electrode sheet (S) , the method comprising:
(a) fixing an electrode sheet (S) to the electrode sheet fixing unit (100) at a normal temperature;
(b) setting a stretching length for the electrode sheet (S) and applying a load to the electrode sheet (S) to measure a tensile force;
(c) moving the temperature adjustment unit (200) to cover opposite side surfaces of the electrode sheet fixing unit (100) and measuring a tensile force; and
(d) moving the temperature adjustment unit (200) such that the electrode sheet fixing unit (100) is exposed to the normal temperature and measuring a tensile force **characterized in that** the method uses an apparatus for simulating thermal wrinkles according to any of claims 1 to 7.

9. The method according to claim 8, wherein, during step (c), the temperature adjustment unit (200) is heated in advance to a predetermined temperature.

10. The method according to claim 8, wherein step (c) further comprises heating the temperature adjustment unit (200) to a predetermined temperature after the temperature adjustment unit (200) is located at the opposite side surfaces of the electrode sheet fixing unit (100).

11. The method according to claim 8, wherein, during step (c) and step (d), the temperature adjustment unit (200) is moved along the rail (300).

12. The method according to claim 8, wherein, during step (c), an air curtain is formed by the spray nozzles (225) located along the edge of the inner surface of the first cover portion (211) and/or the second cover portion (221) .

## Patentansprüche

1. Vorrichtung zur Simulation von Wärmefalten in einer Elektrodenfolie (S) mit einer darauf aufgebrachten Aktivmaterialschicht die während des Trocknens der Elektrodenfolie (S) erzeugt werden, wobei die Vorrichtung umfasst:
eine Elektrodenfolien-Fixiereinheit (100) die so konfiguriert ist dass sie eine Zuglast auf die Elektrodenfolie (S) aufbringt um die Elektrodenfolie (S) in einem Zustand in dem gegenüberliegenden Enden der Elektrodenfolie (S) an der Fixiereinheit (100) fixiert sind um eine vorbestimmte Länge zu dehnen;
eine Temperatureinstellungseinheit (200) die so konfiguriert ist dass sie die Elektrodenfolien-Fixiereinheit (100) auf eine vorbestimmte Temperatur erwärmt während sie die Elektrodenfolien-Fixiereinheit (100) abdeckt; und
eine Schiene (300) die so konfiguriert ist dass sie die Temperatureinstellungseinheit (200) bewegt,
**dadurch gekennzeichnet dass** die Temperatureinstellungseinheit (200) ein erstes Element (210) und ein zweites Element (220) umfasst die so konfiguriert sind dass sie an gegenüberliegenden Seitenflächen der Elektrodenfolien-Fixiereinheit (100) angeordnet sind,
wobei das erste Element (210) einen ersten Abdeckabschnitt (211), der eine rechteckige Platte ist, und zwei erste Räder (213) umfasst, die an einem unteren Ende des ersten Abdeckabschnitts (211) derart montiert sind dass der erste Abdeckabschnitt (211) beweglich ist,
wobei das zweite Element einen zweiten Abdeckabschnitt (221) der eine rechteckige Platte ist, und zwei zweite Räder (223) umfasst die an einem unteren Ende des zweiten Abdeckabschnitts (221) derart montiert sind dass der zweite Abdeckabschnitt (221) beweglich ist, und
wobei ein Heizabschnitt der so konfiguriert ist dass er die Elektrodenfolien-Fixiereinheit (100) auf einer vorbestimmten Temperatur hält an einer Innenfläche des ersten Abdeckabschnitts (211) und/oder des zweiten Abdeckabschnitts (221) angeordnet ist,
wobei die Schiene durch eine erste Schiene (310) und eine zweite Schiene (320) gebildet wird wobei die zwei ersten Räder (213) auf der ersten Schiene (310) sitzen und die zwei zweiten Räder (223) auf der zweiten Schiene (320) sitzen, um Bewegungsbahnen des ersten Elements (210) und des zweiten Elements (220) bereitzustellen.

2. Vorrichtung nach Anspruch 1, wobei die Elektrodenfolien-Fixiereinheit (100) umfasst:
einen Halteabschnitt (110) umfassend einen ersten Halteabschnitt (111) mit einem ersten Fixierabschnitt (111') der so konfiguriert ist dass er ein oberes Ende der Elektrodenfolie (S) daran fixiert, und einen zweiten Halteabschnitt (112) der sich unter dem ersten Halteabschnitt (111) befindet, wobei der zweite Halteabschnitt einen zweiten Fixierabschnitt (112') aufweist der so konfiguriert ist dass er ein unteres Ende der Elektrodenfolie (S) daran fixiert;
einen Belastungsabschnitt (120) umfassend eine erste Belastungsstange (121) die mit dem ersten Halteabschnitt (111) verbunden ist und eine zweite Belastungsstange (122) die so konfiguriert ist dass sie den zweiten Halteabschnitt (112) stützt;
einen Antriebsabschnitt (130) der so konfiguriert ist dass er die erste Belastungsstange (121) nach oben und nach unten bewegt;
einen Stützrahmen (140) umfassend eine vertikale Stange (141) die sich vertikal in einem Zustand erstreckt, in dem sie sich um eine vorbestimmte Länge erstreckt und eine horizontale Stange (142) die vertikal entlang der vertikalen Stange (141) nach oben und nach unten bewegbar ist, wobei eine Seite der horizontalen Stange (142) mit dem Antriebsabschnitt (130) verbunden ist;
eine Steuerung (150) die mit dem Stützrahmen (140) verbunden ist wobei die Steuerung (150) so konfiguriert ist dass sie eine Dehnungslänge und eine Zuglast der Elektrodenfolie (S) steuert und misst; und
eine Stützmatrize (160), die ein unteres Ende des zweiten Halteabschnitts (112) und ein unteres Ende der vertikalen Stange (141) stützt.

3. Vorrichtung nach Anspruch 1, wobei ein oberer Teil des ersten Abdeckabschnitts (211) in einer Richtung zur Elektrodenfolien-Fixiereinheit (100) bogenförmig ausgebildet ist.

4. Vorrichtung nach Anspruch 1, wobei ein oberer Teil des zweiten Abdeckabschnitts (221) in einer Richtung zur Elektrodenfolien-Fixiereinheit (100) bogenförmig ausgebildet ist.

5. Vorrichtung nach Anspruch 1, wobei ein Verlängerungsabschnitt an gegenüberliegenden Seiten oder einer Seite des ersten Abdeckabschnitts (211) vorgesehen ist um sich in einer Richtung zur Elektrodenfolien-Fixiereinheit (100) zu erstrecken.

6. Vorrichtung nach Anspruch 1, wobei ein Verlängerungsabschnitt an gegenüberliegenden Seiten oder einer Seite des zweiten Abdeckabschnitts (221) vorgesehen ist um sich in einer Richtung zur Elektrodenfolien-Fixiereinheit (100) zu erstrecken.

7. Vorrichtung nach Anspruch 1, wobei eine Vielzahl von Sprühdüsen (225) die so konfiguriert sind dass sie einen Luftvorhang bilden um die Elektrodenfolien-Fixiereinheit (100) auf einer vorbestimmten Temperatur zu halten an einem Rand einer Innenfläche des ersten Abdeckabschnitts (211) und/oder des zweiten Abdeckabschnitts (221) vorgesehen ist.

8. Verfahren zur Simulation von Wärmefalten in einer Elektrodenfolie (S), wobei das Verfahren umfasst:
(a) Fixieren einer Elektrodenfolie (S) an der Elektrodenfolien-Fixiereinheit (100) bei Normaltemperatur;
(b) Einstellen einer Dehnungslänge für die Elektrodenfolie (S) und Aufbringen einer Last auf die Elektrodenfolie (S) um eine Zugkraft zu messen;
(c) Bewegen der Temperatureinstellungseinheit (200), um gegenüberliegende Seitenflächen der Elektrodenfolien-Fixiereinheit (100) abzudecken und Messen einer Zugkraft; und
(d) Bewegen der Temperatureinstellungseinheit (200) derart, dass die Elektrodenfolien-Fixiereinheit (100) der Normaltemperatur ausgesetzt ist und Messen einer Zugkraft,
**dadurch gekennzeichnet dass** das Verfahren eine Vorrichtung zur Simulation von Wärmefalten nach einem der Ansprüche 1 bis 7 verwendet.

9. Verfahren nach Anspruch 8, wobei während des Schritts (c) die Temperatureinstellungseinheit (200) im Voraus auf eine vorbestimmte Temperatur erwärmt wird.

10. Verfahren nach Anspruch 8, wobei Schritt (c) ferner das Erwärmen der Temperatureinstellungseinheit (200) auf eine vorbestimmte Temperatur umfasst nachdem die Temperatureinstellungseinheit (200) an den gegenüberliegenden Seitenflächen der Elektrodenfolien-Fixiereinheit (100) angeordnet ist.

11. Verfahren nach Anspruch 8, wobei während des Schritts (c) und des Schritts (d) die Temperatureinstellungseinheit (200) entlang der Schiene (300) bewegt wird.

12. Verfahren nach Anspruch 8, wobei während des Schritts (c) ein Luftvorhang durch die Sprühdüsen (225) gebildet wird die entlang des Rands der Innenfläche des ersten Abdeckabschnitts (211) und/oder des zweiten Abdeckabschnitts (221) angeordnet sind.

## Revendications

1. Dispositif de simulation de rides thermiques d'une feuille d'électrode (S) sur laquelle est appliqué un matériau actif générées lors du séchage de la feuille d'électrode (S), le dispositif comprenant :
une unité de fixation de feuille d'électrode (100) configurée pour appliquer une charge de traction à la feuille d'électrode (S) afin d'étirer la feuille d'électrode (S) d'une longueur prédéterminée dans un état dans lequel des extrémités opposées de la feuille d'électrode (S) sont fixées à l'unité de fixation (100) ;
une unité de réglage de température (200) configurée pour chauffer l'unité de fixation de feuille d'électrode (100) à une température prédéterminée tout en recouvrant l'unité de fixation de feuille d'électrode (100) ; et
un rail (300) configuré pour déplacer l'unité de réglage de température (200),
**caractérisé en ce que** l'unité de réglage de température (200) comprend un premier élément (210) et un second élément (220) configurés pour être situés sur des surfaces latérales opposées de l'unité de fixation de feuille d'électrode (100),
le premier élément (210) comprend une première partie de couvercle (211), qui est une plaque rectangulaire, et deux premières roues (213) montées sur une extrémité inférieure de la première partie de couvercle (211) de sorte que la première partie de couvercle (211) soit mobile,
le second élément comprend une seconde partie de couvercle (221), qui est une plaque rectangulaire, et deux secondes roues (223) montées sur une extrémité inférieure de la seconde partie de couvercle (221) de sorte que la seconde partie de couvercle (221) soit mobile, et
une partie de chauffage configurée pour maintenir l'unité de fixation de feuille d'électrode (100) à une température prédéterminée est située sur une surface interne de la première partie de couvercle (211) et/ou de la seconde partie de couvercle (221),
dans lequel le rail est constitué d'un premier rail (310) et d'un second rail (320), dans lequel les deux premières roues (213) reposent sur le premier rail (310) et les deux secondes roues (223) reposent sur le second rail (320) pour fournir des trajets de déplacement du premier élément (210) et du second élément (220).

2. Dispositif selon la revendication 1, dans lequel l'unité de fixation de feuille d'électrode (100) comprend :
une partie de maintien (110) comprenant une première partie de maintien (111) ayant une première partie de fixation (111') configurée pour y fixer une extrémité supérieure de la feuille d'électrode (S) et une seconde partie de maintien (112) située sous la première partie de maintien (111), la seconde partie de maintien ayant une seconde partie de fixation (112') configurée pour y fixer une extrémité inférieure de la feuille d'électrode (S) ;
une partie de chargement (120) comprenant une première barre de chargement (121) connectée à la première partie de maintien (111) et une seconde barre de chargement (122) configurée pour supporter la seconde partie de maintien (112) ;
une partie d'entraînement (130) configurée pour déplacer la première barre de chargement (121) vers le haut et vers le bas ;
un cadre de support (140) comprenant une barre verticale (141) située verticalement dans un état d'extension d'une longueur prédéterminée et une barre horizontale (142) mobile vers le haut et vers le bas verticalement le long de la barre verticale (141), un côté de la barre horizontale (142) étant connecté à la partie d'entraînement (130) ;
un contrôleur (150) connecté au cadre de support (140), le contrôleur (150) étant configuré pour contrôler et mesurer une longueur d'étirement et une charge de traction de la feuille d'électrode (S) ; et
une matrice de support (160) supportant une extrémité inférieure de la seconde partie de maintien (112) et une extrémité inférieure de la barre verticale (141).

3. Dispositif selon la revendication 1, dans lequel une partie supérieure de la première partie de couvercle (211) est arquée dans une direction vers l'unité de fixation de feuille d'électrode (100).

4. Dispositif selon la revendication 1, dans lequel une partie supérieure de la seconde partie de couvercle (221) est arquée dans une direction vers l'unité de fixation de feuille d'électrode (100).

5. Dispositif selon la revendication 1, dans lequel une partie d'extension est prévue sur des côtés opposés ou sur un côté de la première partie de couvercle (211) de manière à s'étendre dans une direction vers l'unité de fixation de feuille d'électrode (100).

6. Dispositif selon la revendication 1, dans lequel une partie d'extension est prévue sur des côtés opposés ou sur un côté de la seconde partie de couvercle (221) de manière à s'étendre dans une direction vers l'unité de fixation de feuille d'électrode (100).

7. Dispositif selon la revendication 1, dans lequel une pluralité de buses de pulvérisation (225) configurées pour former un rideau d'air afin de maintenir l'unité de fixation de feuille d'électrode (100) à une température prédéterminée est prévue sur un bord d'une surface interne de la première partie de couvercle (211) et/ou de la seconde partie de couvercle (221).

8. Procédé de simulation de rides thermiques d'une feuille d'électrode (S), le procédé comprenant :
(a) la fixation d'une feuille d'électrode (S) à l'unité de fixation de feuille d'électrode (100) à une température normale ;
(b) le réglage d'une longueur d'étirement pour la feuille d'électrode (S) et l'application d'une charge à la feuille d'électrode (S) pour mesurer une force de traction ;
(c) le déplacement de l'unité de réglage de température (200) pour recouvrir des surfaces latérales opposées de l'unité de fixation de feuille d'électrode (100) et la mesure d'une force de traction ; et
(d) le déplacement de l'unité de réglage de température (200) de sorte que l'unité de fixation de feuille d'électrode (100) soit exposée à la température normale et la mesure d'une force de traction,
**caractérisé en ce que** le procédé utilise un dispositif de simulation de rides thermiques selon l'une quelconque des revendications 1 à 7.

9. Procédé selon la revendication 8, dans lequel, pendant l'étape (c), l'unité de réglage de température (200) est chauffée à l'avance à une température prédéterminée.

10. Procédé selon la revendication 8, dans lequel l'étape (c) comprend en outre le chauffage de l'unité de réglage de température (200) à une température prédéterminée après que l'unité de réglage de température (200) est située au niveau des surfaces latérales opposées de l'unité de fixation de feuille d'électrode (100).

11. Procédé selon la revendication 8, dans lequel, pendant l'étape (c) et l'étape (d), l'unité de réglage de température (200) est déplacée le long du rail (300).

12. Procédé selon la revendication 8, dans lequel, pendant l'étape (c), un rideau d'air est formé par les buses de pulvérisation (225) situées le long du bord de la surface interne de la première partie de couvercle (211) et/ou de la seconde partie de couvercle (221).
